Europäisches Patentamt

European Patent Office

Office européen des brevets

(11) Veröffentlichungsnummer: **0 016 929**
B1

# EUROPÄISCHE PATENTSCHRIFT

(45) Veröffentlichungstag der Patentschrift:
25.11.81

(21) Anmeldenummer: 80100523.2

(22) Anmeldetag: 02.02.80

(51) Int. Cl.³: **F 01 M 11/06,** F 01 M 11/12,
G 01 F 23/06

(54) Einrichtung zur Überwachung des Vorrates an fliessfähigem Schmiermittel in einem Kraftfahrzeug.

(30) Priorität: 31.03.79 DE 2912999

(43) Veröffentlichungstag der Anmeldung:
15.10.80 Patentblatt 80/21

(45) Bekanntmachung des Hinweises auf die Patenterteilung:
25.11.81 Patentblatt 81/47

(84) Benannte Vertragsstaaten:
DE FR GB IT

(56) Entgegenhaltungen:
CH-A-449 520
DE-A-2 430 680
DE-B-2 820 924
US-A-1 886 729
US-A-2 283 303

(73) Patentinhaber: VDO Adolf Schindling AG,
Gräfstrasse 103, D-6000 Frankfurt/Main (DE)

(72) Erfinder: Rau, Karl, Blumenstrasse 20, D-6052 Mühlheim
(DE)
Erfinder: Vogler, Willi, Königsberger Strasse 2,
D-6369 Schöneck 1 (DE)

(74) Vertreter: Könekamp, Herbert, Dipl.-Ing., Sodener
Strasse 9, D-6231 Schwalbach (DE)

Einrichtung zur Überwachung des Vorrates an fließfähigem Schmiermittel in einem Kraftfahrzeug

Die Erfindung betrifft eine Einrichtung zur Überwachung des Vorrates an fließfähigem Schmiermittel im Auffangbehälter eines Kraftfahrzeuges, insbesondere des Ölvorrates im Kurbelgehäuse eines Motors, mit einem mit dem Auffangbehälter kommunizierenden Beruhigungsgefäß, in dem ein niveauabhängig schaltender Schwimmer längsverschiebbar geführt ist.

Einrichtungen der genannten Art sollen rechtzeitig ein Signal liefern, um den Fahrer eines Kraftfahrzeuges davor zu warnen, daß ein Aggregat seines Fahrzeuges wegen Schmiermittelmangel ausfällt und zerstört werden kann. Die Einrichtungen dienen zur Ergänzung einer an sich bekannten Öldruckanzeige, die nur indirekt eine Anzeige über vorhandene Schmierstoffe liefert. In ausreichend großem Abstand vor Erreichen eines Zustandes, in dem kein Schmierstoff mehr vorhanden ist, soll also rechtzeitig ein Signal geliefert werden.

Bei einer Vorrichtung zur Überwachung des Schmiermittels eines automatischen Getriebes wurde bereits vorgeschlagen, einen entlang eines Schutzrohrkontaktes geführten Magnetschwimmer zu verwenden (DE-A 2 430 680). Durch Bewegungen des Fahrzeuges erzeugte unbegründete Signale werden dabei dadurch verhindert, daß nur in Park- und Normalstellung, also nicht in Fahrtstellung gemessen wird. Dies ist nur mit zusätzlichem Aufwand für einen elektrischen Schalter durchführbar.

Der Erfindung liegt daher die Aufgabe zugrunde, eine Einrichtung zur Überwachung des Schmiermittelvorrates zu schaffen, die sowohl in Fahrtstellung als auch bei Stillstand meßbereit ist und durch Neigung verursachte unbegründete Signale mit sicher wirkenden Maßnahmen verhindert.

Diese Aufgabe wird bei einer Einrichtung der eingangs genannten Art dadurch gelöst, daß die Einrichtung mit auf Neigung ansprechenden mechanischen Sperrmitteln für den Schwimmer ausgerüstet ist. Auf diese Weise werden von dem Geber erst gar keine falschen Signale ausgelöst.

Besonders vorteilhaft wirken die Sperrmittel nur bei Überschreitung eines vorgegebenen Neigungswertes, vorzugsweise bei Überschreitung des Neigungswinkels über 10° Abweichung von der lotrechten Lage, da sich herausgestellt hat, daß erst dann das Schmiermittel aus dem Beruhigungsgefäß abzuwandern beginnt. Innerhalb des zulässigen Arbeitsbereiches werden Normalsignale des Gebers geliefert und angezeigt.

Eine vorteilhafte Ausgestaltung der Erfindung besteht darin, daß die Sperrmittel an einem ringförmigen Schwimmer angebracht sind bzw. angreifen, der mit radialem Spiel entlang eines Rohres längsverschiebbar geführt ist und einen Magnet trägt, durch den in einem Rohr des Beruhigungsgefäßes angebrachte Schutzrohrkontakte betätigbar sind. Solche Schwimmer können vorteilhaft so gleichmäßig ausgestaltet sein, daß die Sperrmittel radial symmetrisch ausgebildet sind und richtungsunabhängig auf Neigungen beliebiger Richtungen ansprechen.

Eine vorteilhafte Ausgestaltung der Erfindung besteht darin, daß die Sperrmittel als Bremse ausgebildet sind, die den Schwimmer bei Überschreitung eines vorgegebenen Neigungswertes durch erhöhte mechanische Reibung an einer Führung blockieren, weil es ohne großen Aufwand möglich ist, den Schwimmer, das Rohr und/oder das Beruhigungsgefäß mit erhöhter Reibung erzeugender Oberfläche auszugestalten. Eine vorteilhafte Ausgestaltung der Erfindung besteht darin, daß auf der Oberfläche des Schwimmers, des Rohres und/oder des Beruhigungsgefäßes quer zur Führungsrichtung Ansätze und/oder Ausnehmungen angeordnet sind, die bei Überschreitung einer vorgegebenen Neigung im Sinne einer Bremse des Schwimmers wirken.

Eine weitere vorteilhafte Ausgestaltung der Erfindung besteht darin, daß im Beruhigungsgefäß bewegliche Teile angeordnet sind, die bei Überschreitung eines vorgegebenen Neigungswinkels mit dem Schwimmer zusammenwirken, weil es dadurch möglich ist, die bekannten Geber unverändert weiterzuverwenden, bei dem bewegliche Teile zusätzlich in einem Beruhigungsgefäß angebracht werden.

Als zusätzliche Teile können vorteilhaft im Beruhigungsgefäß Kugeln verwendet werden, deren Durchmesser kleiner als der Innendurchmesser des Schwimmers ist, so daß der Schwimmer normalerweise von ihnen nicht behindert ist, die aber bei Überschreitung eines vorgegebenen Neigungswinkels unter den Schwimmer rollen und ihn blockieren. Die Bewegungsfreiheit einer solchen Kugel wird vorteilhaft von einem muldenförmig ausgebildeten Boden des Beruhigungsgefäßes eingeschränkt. Darüber hinaus können auch noch am Schwimmer vorteilhafte Gleitflächen angeformt sein, von denen die Kugel nach Wegfall der Neigung wieder in die Mitte des Schwimmers verdrängt wird, damit dieser nicht unnötig lange blockiert ist.

Andere vorteilhafte Ausgestaltungen der Erfindung bestehen darin, daß mindestens ein zusätzlicher oder mindestens drei Hebel allein für sich im Beruhigungsgefäß schwenkbar als sperrende Mittel angeordnet sind, mit denen ein neuer Geber ohne großen Aufwand herstellbar ist.

Schließlich wird auch darin ein Vorteil der Erfindung gesehen, daß das Beruhigungsgefäß mit dem Auffangbehälter durch eine im Boden angeordnete labyrinthartige Leitung verbunden ist, um auf die Schmiermittelverbindung beruhigend einzuwirken, ohne den Durchflußquerschnitt wesentlich einzugrenzen.

Weitere Ausgestaltungen der Erfindung werden an Hand der in der Zeichnung schematisch dargestellten Ausführungsbeispiele näher erläutert. Es zeigt

Fig. 1 einen Schnitt durch ein Gefäß mit Schmiermittelgeber in Normallage,

Fig. 2 einen Schnitt durch das Gefäß von Fig. 1 bei Überschreitung einer vorgegebenen Neigung, bei der Ansätze und Ausnehmungen ein Verkanten des Schwimmers sichern,

Fig. 3 einen Schnitt durch ein anderes Gefäß in Normallage, mit einer Kugel als Hilfsmittel zur Verkantung,

Fig. 4 einen Schnitt des Gefäßes von Fig. 3 in geneigter Lage,

Fig. 5 einen Querschnitt durch ein anderes Gefäß mit hebelartigen Ansätzen und

Fig. 6 einen Querschnitt des Gefäßes von Fig. 5 in geneigter Lage.

Das Schmiermittel 1 des Beruhigungsgefäßes 2 steht mit dem Schmiermittel eines Auffangbehälters eines nicht gezeichneten Aggregats über ein Labyrinth 8 in Verbindung. Um dessen Schmiermittelvorrat zu prüfen, sind in einem fest im Beruhigungsgefäß 2 angebrachten Rohr 3 Schutzrohrkontakte 4 und 5 angeordnet, wobei das Schmiermittelniveau im statischen Zustand des Aggregates (ohne Schmiermittelumlauf) mit dem Schutzrohrkontakt 4 und im dynamischen Zustand (mit Schmiermittelumlauf), insbesondere bei Fahrt, mit dem Schutzrohrkontakt 5 an Hand der Lage eines Magneten 6 eines ringförmig an das Rohr angepaßten Schwimmers 7 festgestellt wird.

Das Gewicht des dargestellten Schwimmers 7 ist mit dem Gewicht des Magneten 6 und einem eventuell zusätzlich angebrachten Gewichtsstück an das durchschnittliche spezifische Gewicht des Schmiermittels 1 derart angepaßt, daß der Magnet 6 im Ruhezustand über dem Schutzrohrkontakt 4 schwimmt. Weil im Betrieb des Aggregats ein Teil des Schmiermittels im Umlauf ist, erniedrigt sich das Schmiermittelniveau um den Abstand, in dem ein weiterer Schutzrohrkontakt 5 zur Messung im Fahrbetrieb angeordnet ist.

Die als solche bekannte labyrinthartige Verbindung 8 schränkt das Fließen des Schmiermittels nur ein, verhindert also das Absinken des Schmiermittelniveaus bei Überschreitung eines vorgegebenen, zusätzlich wirkenden Beschleunigungswertes, nur kurzfristig. Bei lang anhaltender Kurvenfahrt, bei Bergfahrt oder im Stand an einer Steigungsstelle mit schrägstehendem Fahrzeug oder bei ähnlichen durchaus möglichen Situationen würde der Magnet 6 ein Warnsignal auslösen, obwohl im Auffangbehälter und an anderen Stellen des Aggregats noch genügend Schmiermittelvorrat vorhanden ist. Die mit einem Labyrinth 8 erzeugte Trägheit des Schmiermittelflusses reicht also nicht zur Verhinderung von Fehlanzeigen aus.

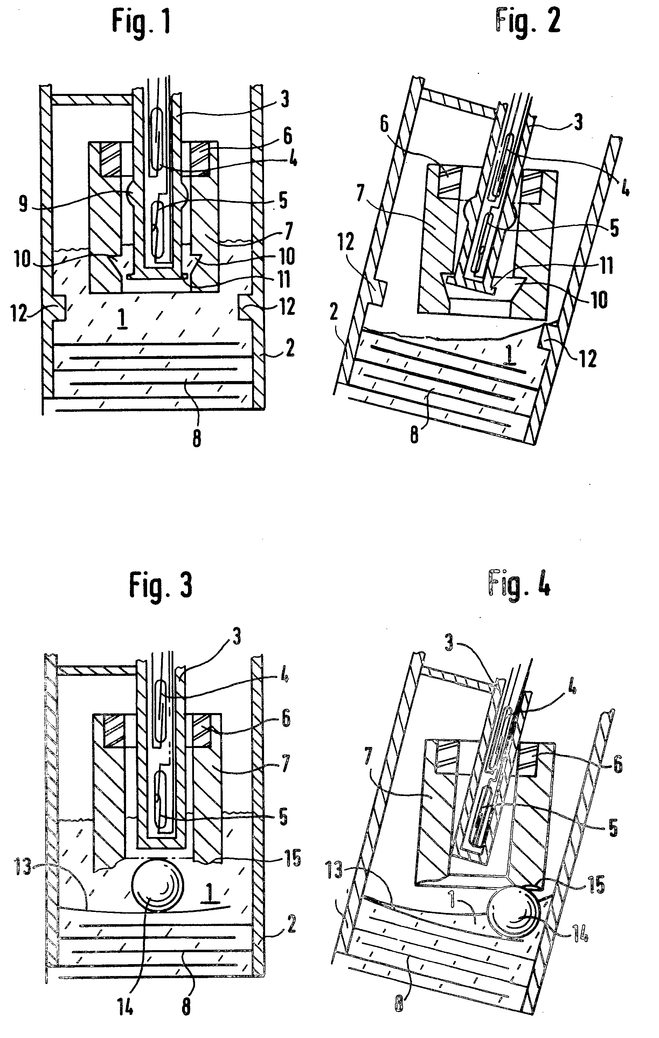

Der ringförmig ausgebildete Schwimmer 7 wird daher erfindungsgemäß mit mechanischen Sperrmitteln mit Toleranz am Rohr 3 längsverschiebbar hergestellt, damit bei Überschreitung einer Neigung über 10° von der lotrechten Lage die Führung des Schwimmers am Rohr 3 blockiert ist. Dies wird dadurch bewerkstelligt, daß über den Ansatz 9 der Schwimmer 7 in eine Lage kippt, die in Fig. 2 gezeigt ist. In Fig. 2 ist der Signalgeber in Schräglage gezeigt, in der das Blockieren der Führung durch Ausnehmungen 10 am Schwimmer 7 und Ansätze 11 des Rohres 3 bewirkt wird. Schließlich zeigt Fig. 2 auch, daß der Schwimmer 7 auch auf einer Schulter 12 aufsitzt, um bei Neigung nicht weiter abzusinken und falschen Alarm auszulösen. Bei Rückkehr in die Normallage kehrt auch das Schmiermittel in das Beruhigungsgefäß 2 zurück, so daß der Schwimmer 7, wie in Fig. 1 gezeigt, wieder frei schwimmt.

Mit einer der angedeuteten Maßnahmen ist der Schwimmer 7 an sich ausreichend sicher blockiert. Er kann jedoch auch mit mehreren Maßnahmen gleichzeitig, wie gezeigt, blockiert werden.

Andere Möglichkeiten zum Blockieren des Schwimmers 7 sind in den Fig. 3 und 4 sowie 5 und 6 gezeigt.

Bei der Ausführungsform nach den Fig. 3 und 4 wird der Schwimmer 7 durch eine in einer Bodenmulde 13 rollende Kugel 14 blockiert, die bei Rücknahme der Neigung von selbst wieder in die Mitte rollt und deren Durchmesser kleiner als der Innendurchmesser des Schwimmers 7 ist. Um die Kugel 14 auch bei nicht zurückfließendem Schmierstoff 1 wieder freizugeben und ein dann berechtigtes Warnsignal abzugeben, ist der Boden 15 des Schwimmers 7 nach innen abgerundet geformt.

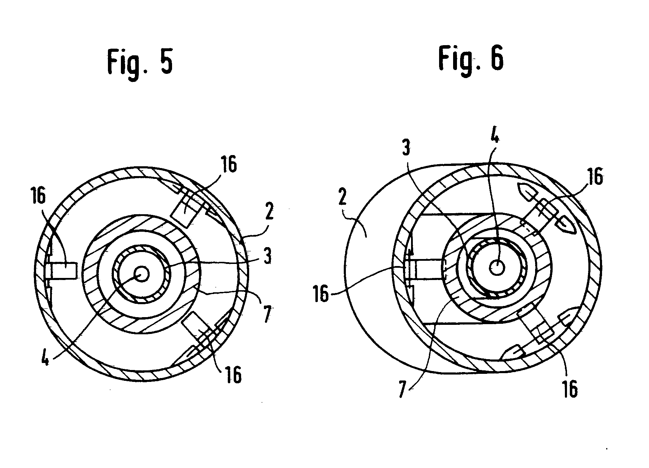

Bei der Ausführungsform nach den Fig. 5 und 6 sind zum Blockieren des Schwimmers drei etwa um 120 Winkelgrade zueinander versetzte Hebel 16 vorhanden, die schwenkbar am Gefäß 2 befestigt sind. Bei Überschreitung der genannten Neigung untergreift zumindest einer der Hebel 16 den Schwimmer 7 und halten diesen in einer keine Warnung auslösenden Stellung fest.

Selbstverständlich kann die Erfindung mit einer der genannten Maßnahmen allein oder in Kombination mit einer oder mehreren der genannten Maßnahmen ausgestaltet werden.

**Patentansprüche**

1. Einrichtung zur Überwachung des Vorrates an fließfähigem Schmiermittel im Auffangbehälter eines Kraftfahrzeuges, insbesondere des Ölvorrates im Kurbelgehäuse eines Motors, mit einem mit dem Auffangbehälter kommunizierenden Beruhigungsgefäß (2), in dem ein niveauabhängig schaltender Schwimmer (7) längsverschiebbar geführt ist, dadurch gekennzeichnet, daß die Einrichtung mit auf Neigung ansprechenden mechanischen Sperrmitteln (9 bis 12, 14, 16) für den Schwimmer ausgerüstet ist.

2. Einrichtung nach Anspruch 1, dadurch gekennzeichnet, daß die Sperrmittel (9 bis 12, 14, 16) nur bei Überschreitung eines vorgegebenen Neigungswertes ansprechen.

3. Einrichtung nach Anspruch 2, dadurch gekennzeichnet, daß die Sperrmittel (9 bis 12, 16) nur bei Überschreitung des Neigungswinkels über 10° Abweichung von der lotrechten Lage ansprechen.

4. Einrichtung nach Anspruch 1 bis 3, dadurch gekennzeichnet, daß die Sperrmittel (9 bis 12, 14, 16) an einem ringförmigen Schwimmer (7) angebracht sind bzw. angreifen, der mit radialem Spiel entlang eines Rohres (3) des Beruhigungsgefäßes (2) längsverschiebbar geführt ist und einen Magnet (6) trägt, durch den im Rohr (3) angebrachte Schutzrohrkontakte (4, 5) betätigbar sind.

5. Einrichtung nach Anspruch 4, dadurch gekennzeichnet, daß die Sperrmittel (9 bis 12, 14, 16) radialsymmetrisch ausgebildet sind und richtungsunabhängig auf Neigungen beliebiger Richtung ansprechen.

6. Einrichtung nach einem der vorhergehenden Ansprüche, dadurch gekennzeichnet, daß die Sperrmittel als Bremse ausgebildet sind, die den Schwimmer (7) bei Überschreitung eines vorgegebenen Neigungswertes durch erhöhte mechanische Reibung an einer Führung blockiert.

7. Einrichtung nach Anspruch 6, dadurch gekennzeichnet, daß der Schwimmer (7), das (Führungs-)Rohr (3) und/oder das Beruhigungsgefäß (2) eine erhöhte Reibung erzeugende Oberfläche hat oder haben.

8. Einrichtung nach Anspruch 7, dadurch gekennzeichnet, daß auf der Oberfläche des Schwimmers (7), des Rohres (3) und/oder des Beruhigungsgefäßes (2) quer zur Führungsrichtung Ansätze (11, 12) und/oder Ausnehmungen (10) angeordnet sind, die bei Überschreitung einer vorgegebenen Neigung miteinander zusammenwirken.

9. Einrichtung nach Anspruch 6, dadurch gekennzeichnet, daß im Beruhigungsgefäß (2) bewegliche Teile (14, 16) angeordnet sind, die bei Überschreitung eines vorgegebenen Neigungswinkels im Sinne einer Bremse des Schwimmers (7) wirken.

10. Einrichtung nach Anspruch 9, dadurch gekennzeichnet, daß im Beruhigungsgefäß (2) mindestens eine Kugel (14) angeordnet ist, deren Durchmesser kleiner als der Innendurchmesser des Schwimmers (7) ist und die bei Überschreitung eines vorgegebenen Neigungswinkels unter den Schwimmer (7) rollt.

11. Einrichtung nach Anspruch 10, dadurch gekennzeichnet, daß der Boden (13) des Beruhigungsgefäßes (2) muldenförmig ausgestaltet ist.

12. Einrichtung nach Anspruch 10 oder 11, dadurch gekennzeichnet, daß an den Schwimmer (7) Gleitflächen (15) angeformt sind, von denen die Kugel (14) bei Wegfall der Neigung in die Ringöffnung des Schwimmers (7) verdrängt wird.

13. Einrichtung nach Anspruch 9, dadurch gekennzeichnet, daß mindestens ein zusätzlicher oder mindestens drei Hebel (16) allein im Beruhigungsgefäß (2) schwenkbar angeordnet sind.

14. Einrichtung nach einem der vorhergehenden Ansprüche, dadurch gekennzeichnet, daß das Beruhigungsgefäß (2) mit dem Auffangbehälter durch eine labyrinthartige Leitung (8) verbunden ist.

**Claims**

1. Device for monitoring the supply of free-flowing lubricant in the collecting vessel of a motor vehicle, especially the oil supply in the crankcase of an engine, with a calming vessel (2) which communicates with the collecting vessel and in which a float (7) switching in dependence on the level is guided so as to be longitudinally displaceable, characterised in that the device is equipped with mechanical blocking means (9 to 12, 14, 16) for the float which respond to inclination.

2. Device according to Claim 1, characterised in that the blocking means (9 to 12, 14, 16) respond only when a predetermined inclination value is exceeded.

3. Device according to Claim 2, characterised in that the blocking means (9 to 12, 14, 16) respond only when the angle of inclination exceeds a deviation of 10° from the vertical position.

4. Device according to Claims 1 to 3, characterised in that the blocking means (9 to 12, 14, 16) are attached to or engage on an annular float (7) which is guided, with radial play, so as to be longitudinally displaceable along a tube (3) of the calming vessel (2) and which carries a magnet (6), by means of which reed contacts (4, 5) fitted in the tube (3) can be actuated.

5. Device according to Claim 4, characterised in that the blocking means (9 to 12, 14, 16) are made radially symmetrical and respond, independently of direction, to inclinations in any direction.

6. Device according to one of the preceding claims, characterised in that the blocking means are designed as a brake which, when a predetermined inclination value is exceeded, blocks the float (7) as a result of increased mechanical friction on a guide.

7. Device according to Claim 6, characterised in that the float (7), the (guide) tube (3) and/or the calming vessel (2) has or have a surface generating increased friction.

8. Device according to Claim 7, characterised in that arranged on the surface of the float (7), of the tube (3) and/or of the calming vessel (2), transversely to the guide direction, are projections (11, 12) and/or recesses (10) which interact with one another when a predetermined inclination is exceeded.

9. Device according to Claim 6, characterised in that arranged in the calming vessel (2) are movable parts (14, 16) which act in the manner of a brake of the float (7) when a predetermined angle of inclination is exceeded.

10. Device according to Claim 9, characterised in that arranged in the calming vessel (2) is at least one ball (14), the diameter of which is less than the inside diameter of the float (7) and which rolls under the float (7) when a predetermined angle of inclination is exceeded.

11. Device according to Claim 10, characterised in that the bottom (13) of the calming vessel (2) is made trough-shaped.

12. Device according to Claim 10 or 11, characterised in that sliding faces (15) are shaped on the float (7), and the ball (14) is displaced into the annular orifice of the float (7) when the inclination is cancelled.

13. Device according to Claim 9, characterised in that at least one additional lever or at least three levers (16) are arranged pivotably in the calming vessel (2) only.

14. Device according to one of the preceding claims, characterised in that the calming vessel (2) is connected to the collecting vessel by a labyrinth-like line (8).

**Revendications**

1. Dispositif de contrôle de la réserve de lubrifiant fluide contenue dans le réservoir collecteur d'un véhicule automobile, notamment de la réserve d'huile du carter du vilebrequin d'un moteur, comportant un réservoir stabilisateur (2) communiquant avec ledit réservoir collecteur, et dans lequel est mobile longitudinalement un flotteur (7) agissant en fonction du niveau, dispositif caractérisé par le fait que son flotteur est équipé d'organes mécaniques de blocage (9 à 12; 14; 16) réagissant en fonction de l'inclinaison.

2. Dispositif selon la revendication 1, caractérisé par le fait que ses organes de blocage (9 à 12; 14; 16) ne réagissent que lorsqu'est dépassée une valeur d'inclinaison prédéterminée.

3. Dispositif selon la revendication 2, caractérisé par le fait que ses organes de blocage (9 à 12; 14; 16) ne réagissent que lorsqu'est dépassé un angle d'inclinaison dont l'écart par rapport à la verticale dépasse 10°.

4. Dispositif selon l'une quelconque des revendications 1 à 3, caractérisé par le fait que les organes de blocage (9 à 12; 14; 16) sont montés sur un flotteur annulaire (7) ou viennent en prise avec ce dernier, lequel est mobile longitudinalement avec un jeu radial le long d'un tube (3) incorporé dans le réservoir stabilisateur (2), et supporte un aimant (6) pouvant actionner des contacts (4, 5) à lames souples logés dans ledit tube (3).

5. Dispositif selon la revendication 4, caractérisé par le fait que ses organes de blocage (9 à 12; 14; 16) ont une forme symétrique dans le sens radial et réagissent aux inclinaisons, indépendamment des directions de ces dernières.

6. Dispositif selon l'une quelconque des revendications 1 à 5, caractérisé par le fait que les organes de blocage consistent en un frein qui empêche le déplacement du flotteur (7) par un frottement mécanique accru lorsqu'est dépassée une inclinaison prédéterminée.

7. Dispositif selon la revendication 6, caractérisé par le fait que le flotteur (7), le tube (3) et, éventuellement ou en variante, le réservoir stabilisateur (2) sont dotés de surfaces provoquant une friction accrue.

8. Dispositif selon la revendication 7, caractérisé par le fait que des parties saillantes (11, 12) et, éventuellement ou en variante, des évidements (10), disposés perpendiculairement au sens du déplacement, à la surface du flotteur (7), du tube (3) et, éventuellement ou en variante, du réservoir stabilisateur (2), coopèrent lorsqu'une inclinaison prédéterminée est dépassée.

9. Dispositif selon la revendication 6, caractérisé par le fait que des organes mobiles (14; 16), incorporés dans le réservoir stabilisateur (2), agissent comme un frein sur le flotteur (7) lorsqu'est dépassé un angle d'inclinaison prédéterminé.

10. Dispositif selon la revendication 9, caractérisé par le fait que, dans le réservoir stabilisateur (2) est incorporée au moins une bille (14), dont le diamètre est inférieur au diamètre interne du flotteur (7), et qui roule sous ledit flotteur (7) lorsqu'est dépassé un angle d'inclinaison prédéterminé.

11. Dispositif selon la revendication 10, caractérisé par le fait que le fond (13) du réservoir stabilisateur (2) présente la forme d'une cuvette.

12. Dispositif selon l'une des revendications 10 et 11, caractérisé par le fait que, sur le fond (15) du flotteur (7), sont ménagées des surfaces de glissement par lesquelles la bille (14) est poussée dans l'ouverture annulaire dudit flotteur (7) lorsque l'inclinaison cesse.

13. Dispositif selon la revendication 9, caractérisé par le fait qu'au moins une tige supplémentaire ou au moins trois tiges (16) pivotent à l'intérieur du seul réservoir stabilisateur (2).

14. Dispositif selon l'une quelquonque des revendications 1 à 13, caractérisé par le fait que le réservoir stabilisateur (2) communique avec le réservoir collecteur par l'intermédiaire d'un conduit en forme de labyrinthe (8).

# Fig. 1

# Fig. 2

# Fig. 3

# Fig. 4

## Fig. 5

## Fig. 6